# EUROPEAN PATENT APPLICATION

(11) **EP 4 280 797 A1**
(43) Date of publication of application: **22.11.2023**
(21) Application number: 21919355.4
(22) Date of filing: 14.01.2021
(51) Int. Cl.: H04W 76/19

(54) **TERMINAL AND WIRELESS COMMUNICATION METHOD**

(71) Applicant: NTT DOCOMO, INC., Tokyo 100-6150 (JP)
(72) Inventor: MIN Tianyang, Tokyo 100-6150 (JP); HANAKI Akihito, Tokyo 100-6150 (JP)
(74) Representative: Hoffmann Eitle
(86) International application number: PCT/JP2021/001121
(87) International publication number: WO 2022/153462

(57) **Abstract**

The terminal receives the reconfiguration message of the specific layer including the reconfiguration parameter of the deactivated secondary cell group, and performs the reconfiguration of the specific layer related to the secondary cell group based on the reconfiguration parameter included in the received reconfiguration message.

## Description

### [Technical Field]

The present disclosure relates to a terminal and radio communication method that support dual connectivity.

### [Background Art]

3rd Generation Partnership Project (3GPP) specifies 5th generation mobile communication system (5G, also called New Radio (NR) or Next Generation (NG), further, a succeeding system called Beyond 5G, 5G Evolution or 6G is being specified.

For example, in Release -17 of 3 GPP, expansion of Multi-RAT Dual Connectivity (MR-DC) is being considered (Non-Patent Literature 1). Specifically, support for an efficient activation/deactivation mechanism for a secondary cell group (SCG) and a secondary cell (SCell) is addressed.

In addition, with regard to support of such an SCG activation/deactivation mechanism, it has been agreed that processing of a message (Specifically, RRC Reconfiguration) of the radio resource control layer (RRC) should be examined (Non-Patent Literature 2).

### [Citation List]

### [Non-Patent Literature]

Non-Patent Literature 1 "Revised WID on Further Multi-RAT Dual-Connectivity enhancements", RP -201040, 3 GPP TSG RAN Meeting # 88 e, 3 GPP, June 2020
Non-Patent Literature 2 "Report of 3 GPP TSG RAN 2 # 112 - e meeting, Online", R2 -2100001, 3 GPP TSG - RAN WG 2 meeting # 113 - e, 3 GPP, December 2020

### [Summary of Invention]

It was found that the existing RRC (specific layer) specification had a problem that the specification cannot be applied to deactivated SCG as it is because the addition or modification of deactivated SCG (deactivated SCG) specified parameters that are not necessary for normal activated SCG. Therefore, the terminal (User Equipment, UE) cannot operate normally if the specification is applied to the deactivated SCG as it is.

Accordingly, the following disclosure has been made in view of such a situation, and it is an object of the present invention to provide a terminal and a radio communication method capable of realizing normal operation in a specific layer even in the case of a deactivated SCG.

One aspect of the present disclosure is a terminal (UE 200) including a reception unit (RRC processing unit 220) that receives a reconfiguration message of a specific layer including a reconfiguration parameter of a deactivated secondary cell group, and a control unit (control unit 240) that performs reconfiguration of the specific layer with respect to the secondary cell group based on the reconfiguration parameter included in the received reconfiguration message.

One aspect of the present disclosure is a terminal (UE 200) including a reception unit (RRC processing unit 220) that receive a reconfiguration message of a specific layer, and a control unit (control unit 240) that avoids use of a reconfiguration parameter included in the reconfiguration message when a secondary cell group is inactive.

One aspect of the present disclosure is a radio communication method including the steps of receiving, by a terminal, a reconfiguration message of a specific layer including a reconfiguration parameter of a deactivated secondary cell group, and performing, by the terminal, reconfiguration of the specific layer with respect to the secondary cell group based on the reconfiguration parameter included in the received reconfiguration message.

One aspect of the present disclosure is a radio communication method comprising the steps of: receiving, by a terminal, a reconfiguration message of a specific layer, and avoiding, by the terminal, use of a reconfiguration parameter included in the reconfiguration message when a secondary cell group is inactive.

### [Brief Description of Drawings]

[FIG. 1] FIG. 1 is an overall schematic configuration diagram of radio communication system 10.
[FIG. 2] FIG. 2 is a functional block diagram of the eNB 100 A.
[FIG. 3] FIG. 3 is a functional block diagram of the UE 200.
[FIG. 4] FIG. 4 is a diagram showing an example of a communication sequence related to a conventional PSCell addition.
[FIG. 5] FIG. 5 is a diagram showing an example of a communication sequence for adding a PSCell according to the operation example 1.
[FIG. 6] FIG. 6 is a diagram showing a configuration example of a CellGroupConfig including ReconfigurationWithdeactivatedSCG.
[FIG. 7] FIG. 7 is a diagram showing an operation procedure of the UE 200 using the ReconfigurationWithdeactivatedSCG.
[FIG. 8] FIG. 8 is a diagram showing an operation procedure of the UE 200 using the ReconfigurationWithdeactivatedSCG.
[FIG. 9] FIG. 9 is a diagram showing an example of a hardware configuration of the eNB 100 A, the gNB 100 B and the UE 200.

### [Modes for Carrying out the Invention]

Exemplary embodiments of the present invention are explained below with reference to the accompanying drawings. Note that, the same or similar reference numerals have been attached to the same functions and configurations, and the description thereof is

### appropriately omitted.

### (1)Overall schematic configuration of the radio communication system

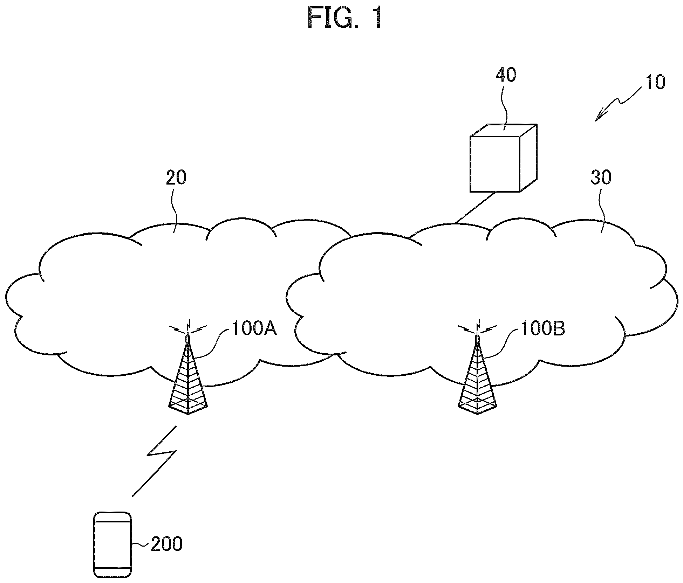

FIG. 1 is an overall schematic configuration diagram of a radio communication system 10 according to this embodiment. The radio communication system 10 is radio communication system according to Long Term Evolution (LTE) and 5G New Radio (NR). Note that LTE may be referred to as 4G and NR may be referred to as 5G. The radio communication system 10 may also be a radio communication system following a scheme called Beyond 5G, 5G Evolution or 6G.

LTE and NR may be interpreted as radio access technologies (RAT), and in this embodiment, LTE may be referred to as a first radio access technology and NR may be referred to as a second radio access technology.

The radio communication system 10 includes the Evolved Universal Terrestrial Radio Access Network 20 (E-UTRAN 20) and the Next Generation-Radio Access Network 30 (hereinafter NG RAN 30). The radio communication system 10 also includes a terminal 200 (UE 200, User Equipment).

The E-UTRAN 20 includes an eNB 100 A which is a radio base station according to LTE. NG RAN 30 includes gNB 100 B which is a radio base station in accordance with 5 G (NR). The NG RAN 30 is connected to a User Plane Function 40 (hereinafter, UPF 40) which is included in the system architecture of 5G and provides user plane functions. The E-UTRAN 20 and the NG RAN 30 (which may be eNB 100 A or gNB 100 B) may simply be referred to as a network.

The eNB 100 A, the gNB 100 B, and the UE 200 can support carrier aggregation (CA) using a plurality of component carriers (CCs), dual connectivity for simultaneously transmitting component carriers between a plurality of NG-RAN nodes and the UE, and the like.

The eNB 100 A, gNB 100 B and UE 200 perform radio communication via a radio bearer, specifically, a Signalling Radio Bearer (SRB) or a DRB Data Radio Bearer (DRB).

In this embodiment, the eNB 100 A may configure the master node (MN) and the gNB 100 B may configure the secondary node (SN) by executing Multi-Radio Dual Connectivity (MR-DC), specifically E-UTRA-NR Dual Connectivity (EN-DC), or the gNB 100 B may configure the MN and the eNB 100 A may configure the SN by executing NR-E-UTRA Dual Connectivity (NE-DC). Alternatively, NR-NR Dual Connectivity (NR-DC) in which the gNB constitutes the MN and SN may be executed.

As described above, the UE 200 supports dual connectivity connecting the eNB 100 A and the gNB 100 B.

The eNB 100 A is included in the master cell group (MCG), and the gNB 100 B is included in the secondary cell group (SCG). That is, the gNB 100 B is an SN included in the SCG.

The eNB 100 A and gNB 100 B may be referred to as radio base stations or network devices.

In addition, radio communication system 10 may support the addition or change of Primary SCell (PSCell). The PSCell addition/change may include a conditional PSCell addition/change.

PSCell is a type of secondary cell. PSCell means Primary SCell (secondary cell), and it may be interpreted that any SCell among a plurality of SCells corresponds to it.

The secondary cell may be read as a secondary node (SN) or a secondary cell group (SCG).

The radio communication system 10 may also support conditional inter-SN PSCell change procedures. Specifically, MN-initiated conditional inter-SN PSCell change and/or SN-initiated conditional inter-SN PSCell change may be supported.

### (2)Function block configuration of radio communication system

Next, the functional block configuration of radio communication system 10 will be described. Specifically, the functional block configurations of the eNB 100 A and the UE 200 will be described.

### (2.1) eNB 100 A

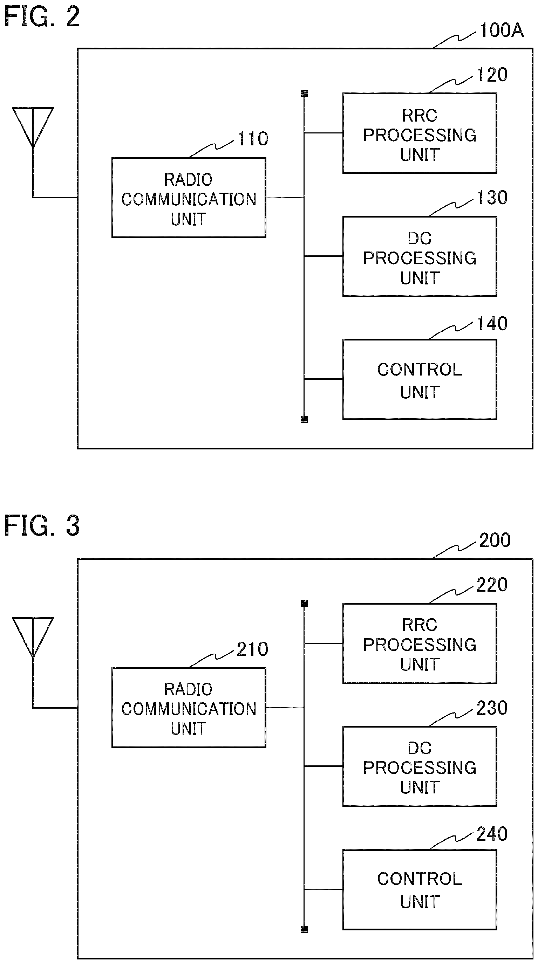

FIG. 2 is a functional block diagram of the eNB 100 A. As shown in FIG. 2, the eNB 100 A includes a radio communication unit 110, an RRC processing unit 120, a DC processing unit 130, and a control unit 140. Although the gNB 100 B also supports NR, it may have the same function as the eNB 100 A.

The radio communication unit 110 transmits a downlink signal (DL signal) in accordance with LTE. The radio communication unit 110 receives an uplink signal (UL signal) in accordance with LTE.

The RRC processing unit 120 executes various processes in the radio resource control layer (RRC). Specifically, the RRC processing unit 120 can transmit the RRC Reconfiguration to the UE 200. The RRC processing unit 120 can receive the RRC Reconfiguration Complete, which is a response to the RRC Reconfiguration, from the UE 200.

In this embodiment, the eNB 100 A supports LTE, but in this case, the name of the RRC message may be RRC Connection Reconfiguration or RRC Connection Reconfiguration Complete.

The DC processing unit 130 executes processing related to dual connectivity, specifically, Multi-RAT Dual Connectivity (MR-DC). In this embodiment, since the eNB 100 A supports LTE and the gNB 100 B supports NR, the DC processing unit 130 may execute processing related to E-UTRA-NR Dual Connectivity (EN-DC). The type of DC is not limited as described above, and may correspond to, for example, NR-E-UTRA Dual Connectivity (NE-DC) or NR-NR Dual Connectivity (NR-DC) .

The DC processing unit 130 can transmit/receive a message specified in the 3 GPP TS 37.340 or the like, and execute processing related to setting and releasing DC between the eNB 100 A, the gNB 100 B and the UE 200.

The control unit 140 controls each functional block constituting the eNB 100 A. In particular, in this embodiment, the control unit 140 performs control regarding the addition or modification of a secondary cell (which may be a secondary node).

Specifically, control unit 140 can perform control regarding the addition or modification of the secondary node (SN) based on, for example, a Measurement Report from the UE 200.

The control unit 140 can also control the secondary cell group (SCG) with respect to activation/de-activation. Specifically, the control unit 140 may activate (may be referred to as activating) or deactivate (may be referred to as deactivating) the SCG. More specifically, control unit 140 may activate or deactivate one or more SCells (May contain PSCell) contained in the SCG.

An active SCG (SCell) may be interpreted as a state in which the UE 200 can immediately use the SCG (SCell). The inactive SCG (SCell) may be interpreted as a state in which the UE 200 cannot immediately use the SCG (SCell), but the setting information is retained.

In this embodiment, the channel includes a control channel and a data channel. The control channels include PDCCH (Physical Downlink Control Channel), PUCCH (Physical Uplink Control Channel), PRACH (Physical Random Access Channel), PBCH (Physical Broadcast Channel), and the like.

The data channels include PDSCH (Physical Downlink Shared Channel) and PUSCH (Physical Uplink Shared Channel).

The reference signals include a Demodulation reference signal (DMRS), a Sounding Reference Signal (SRS), a Phase Tracking Reference Signal (PTRS), and a Channel State Information-Reference Signal (CSI-RS). The data may refer to data transmitted via a data channel.

### (2.2)UE 200

FIG. 3 is a functional block diagram of the UE 200. As shown in FIG. 3, the UE 200 includes a radio communication unit 210, an RRC processing unit 220, a DC processing unit 230, and a control unit 240.

The radio communication unit 210 transmits an uplink signal (UL signal) in accordance with LTE or NR. The radio communication unit 210 receives a downlink signal (DL signal) in accordance with LTE. That is, the UE 200 can access the eNB 100 A (E-UTRAN 20) and the gNB 100 B (NG RAN 30), and can support dual connectivity (Specifically, EN-DC).

The RRC processing unit 220 executes various processes in the radio resource control layer (RRC). Specifically, the RRC processing unit 220 can transmit and receive messages of the radio resource control layer. The radio resource control layer may be expressed as a specific layer.

The RRC processing unit 220 can receive the RRC Reconfiguration from the network, specifically, the E-UTRAN 20 (or NG RAN 30). The RRC processing unit 220 can transmit the RRC Reconfiguration Complete, which is a response to the RRC Reconfiguration, to the network. The RRC Reconfiguration may be interpreted as a type of reconfiguration message that reconfigures the RRC.

The RRC processing unit 220 can receive an RRC reconfiguration message including a reconfiguration parameter of the deactivated SCG, specifically, an RRC Reconfiguration. In this embodiment, the RRC processing unit 220 constitutes a reception unit.

Specifically, the RRC processing unit 220 can receive the RRC Reconfiguration including the SCG RRC Reconfiguration from the MN (For example, eNB 100 A). The SCG RRC Reconfiguration may include an information element (IE) called ReconfigurationWithdeactivatedSCG (which may be tentatively called). The ReconfigurationWithdeactivatedSCG may include reconfiguration parameters (SSB based RRM Measurement Timing Configuration window). Details of the re-setting parameters will be described later.

The DC processing unit 230 executes processing related to dual connectivity, specifically, MR-DC. As described above, in the present embodiment, the DC processing unit 230 may execute processing relating to EN-DC, but may correspond to NE-DC and/or NR-DC.

The DC processing unit 230 accesses the eNB 100 A and the gNB 100 B, respectively, and can execute setting in a plurality of layers (Media access control layer (MAC), radio link control layer (RLC), and packet data convergence protocol layer (PDCP), etc.) including RRC.

The control unit 240 controls each functional block constituting the UE 200. In particular, in this embodiment, the control unit 240 can perform control regarding the activation/deactivation of the secondary cell group (SCG).

Specifically, the control unit 240 may perform a RRC reconfiguration for the SCG based on the reconfiguration parameters included in the received RRC Reconfiguration message. More specifically, control unit 240 may perform control regarding the activation of a deactivated SCG based on parameters contained in ReconfigurationWithdeactivatedSCG.

For example, control unit 240 may perform a RRC reset of the deactivated SCG to reactivate the SCG. The control unit 240 may also avoid using the reconfiguration parameters included in the RRC Reconfiguration when the SCG is inactive (In other words, deactivated SCG). Note that the reset parameter included in the RRC Reconfiguration may be interpreted as being for the activated SCG, not for the deactivated SCG.

Avoidance of use may include the meaning of not using the reset parameter (For example, the parameters included in reconfigurationWithSync), stopping use (pending), or ignoring.

The control unit 240 may also determine whether the SCG is in an inactive state. Specifically, the control unit 240 may determine whether or not the SCG is in an inactive state based on an information element (For example, secondaryCellGroupState (may be a tentative name).) contained in the sPcellConfig (see 3 GPP TS 38.331).

The control unit 240 may abort at least either the bearer of the SCG or the transmission at the SCG if the SCG is in an inactive state. The bearer of the SCG may be interpreted as a radio bearer configured via the SCell included in the SCG. Transmission at the SCG may be interpreted as transmission and reception of signals (data) via the radio bearer. In addition, the "stop" may include the meaning of "suspend" such as "stop" or "suspend".

On the other hand, when the SCG is in the active state, the control unit 240 may perform at least either a bearer of the SCG or a transmission at the SCG. Specifically, when the deactivated SCG returns to the active state, transmission by the bearer of the SCG or the SCG may be resumed.

### (3)Operation of radio communication system

Next, the operation of radio communication system 10 will be described. Specifically, an operation related to the activation/deactivation of the secondary cell group (SCG) will be described.

### (3.1) Conventional Operation Examples and Problems

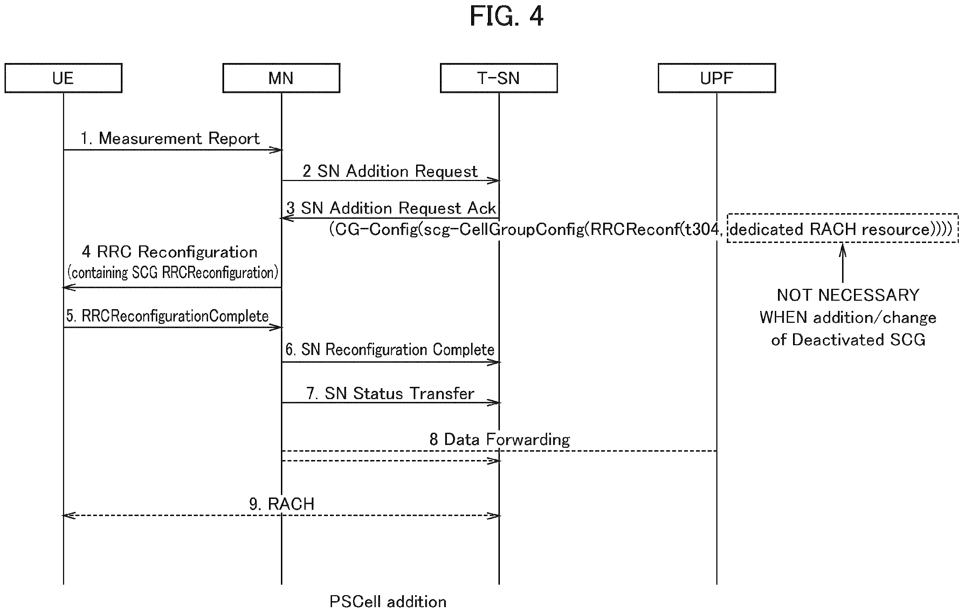

FIG. 4 shows an example of a communication sequence related to a conventional PSCell addition. As shown in FIG. 4, in the conventional communication sequence example, when the MN transmits the RRC Reconfiguration to the UE 200 in the PSCell addition/change (addition or change of the PSCell), the RRC Reconfiguration includes the SCG RRC Reconfiguration. The SCG RRC Reconfiguration may include an information element such as reconfigurationWithSync.

reconfigurationWithSync contains parameters for T 304 and Dedicated RACH resource. Timer T 304 may be started upon receipt of an RRC Reconfiguration message containing reconfigurationWithSync or upon execution of a PSCell addition/change, that is, upon application of an RRC Reconfiguration message containing reconfigurationWithSync, and stopped upon successful completion of random access on the corresponding Special Cell (SpCell).

However, for addition/change of deactivated SCG, T 304 and Dedicated RACH resource are not required. When the timer T 304 expires, it is determined that there is a radio link failure (RLF), handover failure, or synchReconfigFailure SCG (failure of SCG), so it is necessary to avoid the use of this parameter.

That is, the MN needs to configure the resource for the deactivated SCG to the UE 200, separately from the activated SCG, by signaling the RRC.

### (3.2) Example of operation

Hereinafter, an operation example in which addition/change of a normal deactivated SCG can be performed by solving the above problem will be described.

### (3.2.1) Operation Example 1

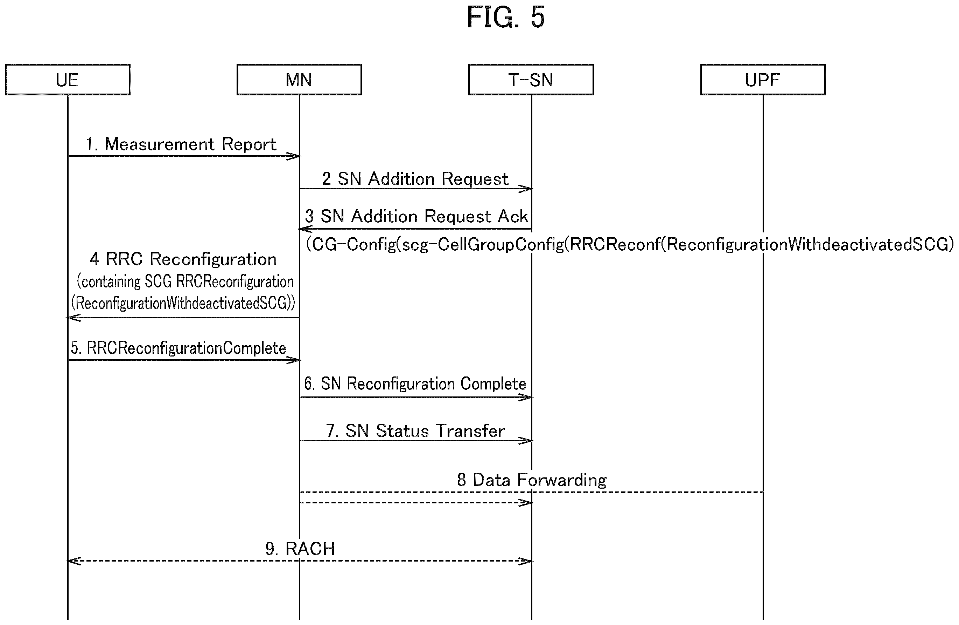

FIG. 5 shows an example of a communication sequence for adding a PSCell according to the operation example 1. Hereinafter, a part different from the communication sequence example (see FIG. 4) related to the addition of PSCell in the prior art will be mainly described.

As shown in FIG. 5, under the RRC Reconfiguration, a ReconfigurationWithdeactivated SCG, which is an IE independent of reconfigurationWithSync, may be provided.

The ReconfigurationWithdeactivatedSCG may include the fields sPCellConfigCommon, newUE-Indentity, smtc.

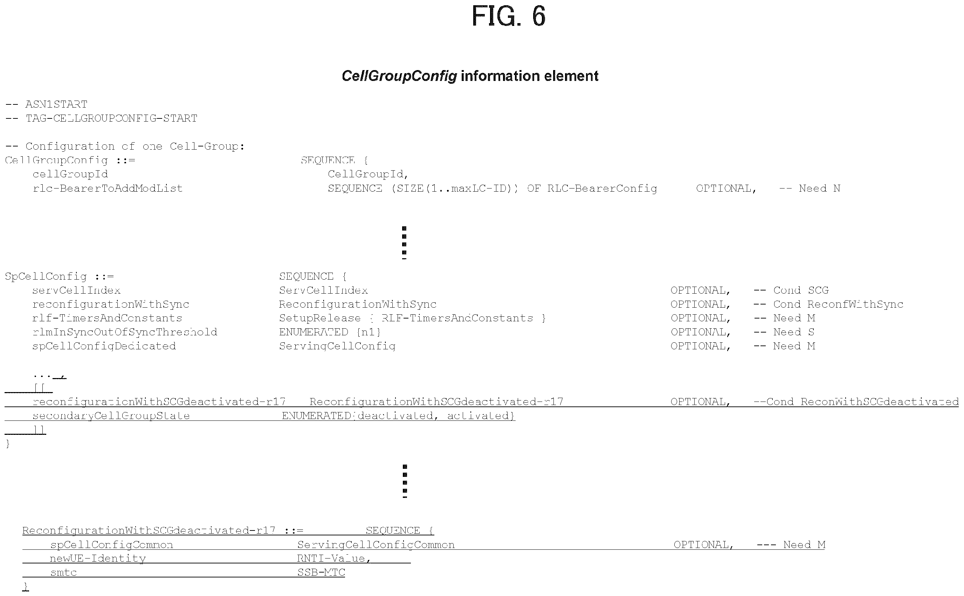

FIG. 6 shows a configuration example of a CellGroupConfig including ReconfigurationWithdeactivatedSCG. The ReconfigurationWithdeactivatedSCG (which may also be ReconfigurationWithSCGdeactivated) may be required in the RRC Reconfiguration message for adding/modifying a PSCell in which the SCG has been deactivated. Otherwise, it may be optional.

As shown in FIG. 6, the ReconfigurationWithdeactivated SCG may include sPCellConfigCommon, newUE-Indentity, smtc.

Note that the ReconfigurationWithdeactivatedSCG may further include a dedicated RACH resource (Contention free RACH resource). By using the dedicated RACH resource after adding/changing the deactivated SCG, it is possible to transition (return) to the active state more quickly.

The sPCellConfigCommon may specify settings for a cell (which may be a serving cell) related to the SCG. The newUE-Indentity may be the identification information of the UE 200, for example, the Radio Network Temporary Identifier (RNTI) may be used. Smtc may indicate the setting of the measurement timing by the synchronous signal block (SSB: SS/PBCH Block) and the radio resource management (RRM) .

A network (Specifically, MN and/or SN) may use reconfigurationWithSync to add/change an activated SCG. On the other hand, the network may use ReconfigurationWithdeactivatedSCG when adding/changing the deactivated SCG.

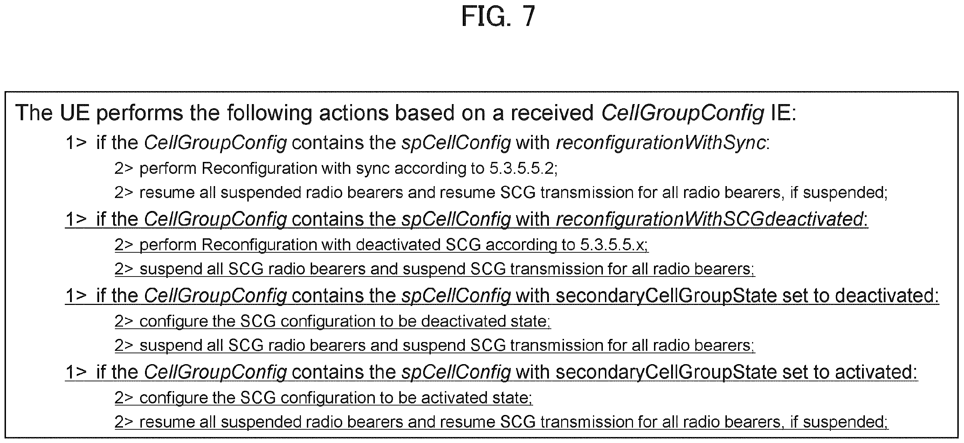

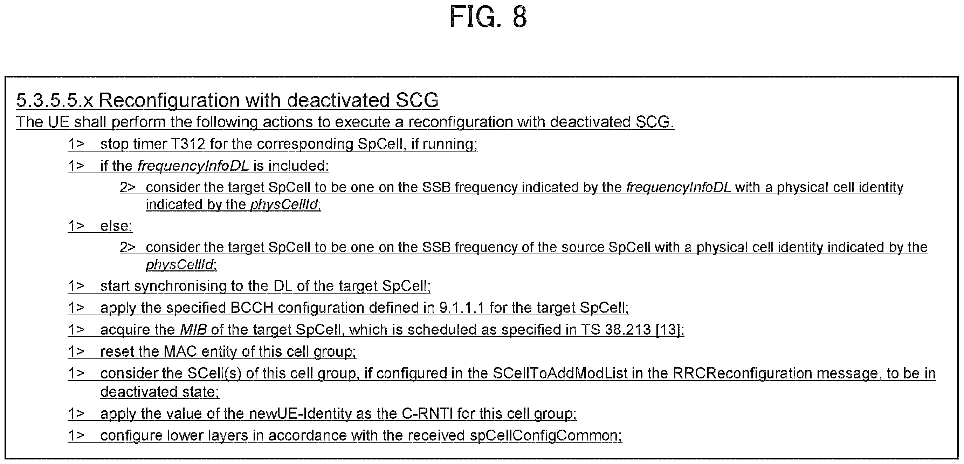

FIGS. 7 and 8 show the operational procedure of the UE 200 using ReconfigurationWithdeactivatedSCG (ReconfigurationWithSCGdeactivated). Specifically, the operation procedure shown in FIG. 7 may be specified in Chapter 5 of the 3 GPP TS 38.331, for example.

As shown in FIGS. 7 and 8, the UE 200 may reconfigure (See Chapter 5.3.5.5 .x in Figure 8) the deactivated SCG if the ReconfigurationWithdeactivatedSCG is included in the CellGroupConfig (spCellConfig). Note that when the UE 200 transitions the SCG from the deactivated state to the activated state, it may execute (In other words, send RACH) a random access procedure using the dedicated RACH resource (Contention free RACH resource) included in the beamFailuerRecoveryConfig.

Alternatively, by providing a dedicated RACH resource (Contention free RACH resource) under the sPCellConfigDedicated (serving CellConfig) IE included in the SpCellConfig, the UE 200 may execute (In other words, send RACH) a random access procedure using the dedicated RACH resource when the SCG transitions from the deactivated state to the activated state.

### (3.2.2) Example 2

In this operational example, the parameters of T 304 and Dedicated RACH resource included in reconfigurationWithSync need not be used by UE 200.

Specifically, if the state of the secondaryCellGroupConfig, sPCellConfig, or mrdc-SecondaryCellGroupConfig included in the received RRC Reconfiguration is deactivated, the UE 200 may 200 not use the T 304 and Dedicated RACH resources included in the reconfigurationWithSync (may be expressed as ignore). The UE 200 may not use the Dedicated RACH resource included in reconfigurationWithSync when adding/changing the deactivated SCG, but may use the Dedicated RACH resource when transitioning from the deactivated state to the activated state.

In this case, the UE 200 may execute the operation procedure shown in FIG. 8 (See Chapter 5.3.5.5 .x in Figure 8).

### (3.2.3) Example 3

In this operation example, an IE called secondaryCellGroupState (Can be a tentative name; see Figure 7) may be provided under sPcellConfig.

If the secondaryCellGroupState is configured to activate, the UE 200 may configure the SCG configuration and/or the PSCell configuration to activate state and resume the SCG radio bearer and the transmission over the radio bearer.

On the other hand, if the secondaryCellGroupState is configured to de-active, the UE 200 may configure the SCG configuration and/or the PSCell configuration to the de-active state and suspend the SCG radio bearer and the transmission over the radio bearer.

### (4)Operational effects

According to the embodiment described above, the following effects are obtained. The UE 200 receives an RRC Reconfiguration including a reconfiguration parameter (ReconfigurationWithdeactivatedSCG) of the deactivated SCG, and can reconfigure the RRC (specific layer) for the SCG based on the reconfiguration parameter.

The UE 200 can also avoid using the conventional reconfiguration parameter (reconfigurationWithSync) included in the RRC Reconfiguration when the SCG is inactive.

Therefore, the signaling of the RRC required for setting the deactivated SCG resource is clarified, and the addition/change function of the deactivated SCG can be realized. That is, according to radio communication system 10, the use of the T 304 and the Dedicated RACH resource can be avoided, and normal operation in the RRC can be realized even in the case of the deactivated SCG.

In this embodiment, the UE 200 may stop at least either the bearer of the SCG or the transmission at the SCG when the SCG is in an inactive state. Therefore, the UE 200 can more reliably avoid the use of the bearer of the SCG in the case of the deactivated SCG, and can realize normal operation.

### (5)Other Embodiments

Although the embodiment has been described above, it is obvious to those skilled in the art that various modifications and improvements are possible without being limited to the description of the embodiment.

For example, in the above embodiment, EN-DC in which MN is eNB and SN is gNB has been described as an example, but other DC may be used as described above. Specifically, it may be NR-DC where MN is gNB and SN is gNB, or NE-DC where MN is gNB and SN is eNB.

SCG deactivation may also be replaced by other terms of a similar meaning, such as deactivation, dormancy, and the like described above.

Further, the block configuration diagrams (FIGS. 2 and 3) used for the description of the above-described embodiment show blocks in units of functions. Those functional blocks (structural components) can be realized by a desired combination of at least one of hardware and software. Means for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, the functional block (component) that functions the transmission is called a transmission unit (transmitting unit) or a transmitter. As described above, there is no particular limitation on the method of implementation.

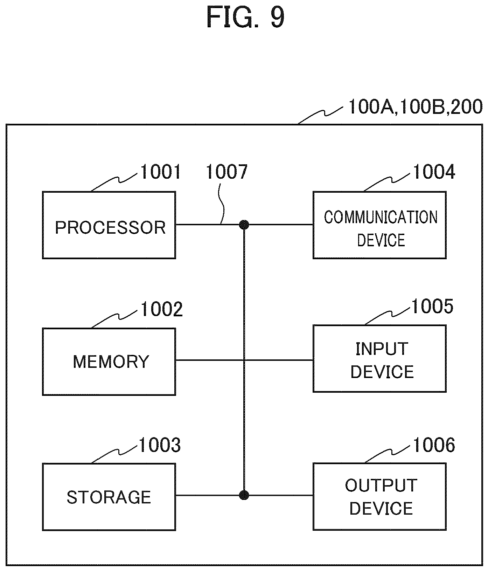

Further, the above-mentioned eNB 100 A, gNB 100 B and UE 200 (the apparatus) may function as a computer that performs processing of the radio communication method of the present disclosure. FIG. 9 is a diagram showing an example of a hardware configuration of the apparatus. As shown in FIG. 9, the device may be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices shown in the figure, or can be constituted by without including a part of the devices.

Each functional block of the device (see FIG. 2.3) is implemented by any hardware element or combination of hardware elements of the computer device.

Moreover, the processor 1001 performs computing by loading a predetermined software (computer program) on hardware such as the processor 1001 and the memory 1002, and realizes various functions of the reference device by controlling communication via the communication device 1004, and controlling reading and/or writing of data on the memory 1002 and the storage 1003.

The processor 1001 operates, for example, an operating system to control the entire computer. Processor 1001 may comprise a central processing unit (CPU) including interfaces to peripheral devices, controllers, arithmetic units, registers, and the like.

Moreover, the processor 1001 reads a computer program (program code), a software module, data, and the like from the storage 1003 and/or the communication device 1004 into the memory 1002, and executes various processes according to the data. As the computer program, a computer program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the computer program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. Memory 1002 may be referred to as a register, cache, main memory, or the like. The memory 1002 may store programs (program codes), software modules, and the like that are capable of executing the method according to one embodiment of the present disclosure.

The storage 1003 is a computer readable recording medium. Examples of the storage 1003 include an optical disk such as Compact Disc ROM (CD-ROM), a hard disk drive, a flexible disk, a magnetooptical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and/or the storage 1003, a server, or other appropriate medium.

The communication device 1004 is hardware (transmission/reception device) capable of performing communication between computers via a wired and/or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Devices such as the processor 1001 and the memory 1002 are connected by a bus 1007 for communicating information. The bus 1007 may be configured using a single bus or may be configured using different buses for each device.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Further, the notification of the information is not limited to the mode/embodiment described in the present disclosure, and other methods may be used. For example, notification of information may be performed by physical layer signaling (e.g., Downlink Control Information (DCI), Uplink Control Information (UCI), higher layer signaling (e.g., RRC signaling, Medium Access Control (MAC) signaling, broadcast information (Master Information Block (MIB), System Information Block (SIB)), other signals, or a combination thereof. The RRC signaling may also be referred to as an RRC message, for example, an RRC Connection Setup message, an RRC Connection Reconfiguration message, and the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each aspect/embodiment described in the present disclosure may be changed in order as long as there is no contradiction. For example, the methods described in this disclosure use an exemplary sequence to present the elements of the various steps and are not limited to the particular sequence presented.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information, signals (information and the like) can be output from an upper layer (or lower layer) to a lower layer (or upper layer). It may be input and output via a plurality of network nodes.

The input/output information can be stored in a specific location (for example, a memory) or can be managed in a management table. The information to be input/output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each of the aspects/embodiments described in the present disclosure may be used alone, in combination, or switched over in accordance with implementation. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of the channel and the symbol may be a signal (signaling). The signal may also be a message. Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The mobile body may be a vehicle (For example, cars, planes, etc.), an unmanned mobile body (Drones, self-driving cars, etc.), or a robot (manned or unmanned). At least one of a base station and a mobile station can be a device that does not necessarily move during the communication operation. For example, at least one of a base station and a mobile station may be an Internet of Things (IoT) device such as a sensor.

The base station in the present disclosure may be read as a mobile station (user terminal). For example, each aspect/embodiment of the present disclosure may be applied to a configuration in which communication between a base station and a mobile station is replaced with communication between a plurality of mobile stations (For example, it may be called Device-to-Device (D2D), Vehicle-to-Everything (V2X), etc.). In this case, the mobile station may have the function of the base station. In addition, words such as "up" and "down" may be replaced with words corresponding to communication between terminals (For example, "side".). For example, terms an uplink channel, a downlink channel, or the like may be read as a side channel.

Similarly, the mobile station in the present disclosure may be read as a base station. In this case, the base station may have the function of the mobile station. A radio frame may be composed of one or more frames in the time domain. Each frame or frames in the time domain may be referred to as a subframe. A subframe may be further configured by one or more slots in the time domain. The subframe may be a fixed time length (For example, 1 ms) independent of the numerology.

Numerology may be a communication parameter applied to at least one of transmission and reception of a certain signal or channel. The numerology can include one among, for example, subcarrier spacing (SubCarrier Spacing: SCS), bandwidth, symbol length, cyclic prefix length, transmission time interval (Transmission Time Interval: TTI), number of symbols per TTI, radio frame configuration, a specific filtering process performed by a transceiver in the frequency domain, a specific windowing process performed by a transceiver in the time domain, and the like.

The slot may be configured with one or a plurality of symbols (Orthogonal Frequency Division Multiplexing (OFDM)) symbols, Single Carrier Frequency Division Multiple Access (SC-FDMA) symbols, etc.) in the time domain. A slot may be a unit of time based on the numerology.

A slot may include a plurality of minislots. Each minislot may be configured with one or more symbols in the time domain. A minislot may also be called a subslot. A minislot may be composed of fewer symbols than slots. PDSCH (or PUSCH) transmitted in time units greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the sub-frame and TTI may be a sub-frame (1 ms) in the existing LTE, a period shorter than 1 ms (For example, 1 -13 symbols), or a period longer than 1 ms. Note that, a unit representing TTI may be called a slot, a minislot, or the like instead of a subframe.

Here, TTI refers to the minimum time unit of scheduling in radio communication, for example. Here, TTI refers to the minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

The TTI may be a transmission time unit such as a channel-encoded data packet (transport block), a code block, or a code word, or may be a processing unit such as scheduling or link adaptation. When TTI is given, a time interval (for example, the number of symbols) in which a transport block, a code block, a code word, etc. are actually mapped may be shorter than TTI.

When one slot or one minislot is called TTI, one or more TTIs (that is, one or more slots or one or more minislots) may be the minimum scheduling unit. The number of slots (minislot number) constituting the minimum time unit of the scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, and the like. TTI shorter than the ordinary TTI may be referred to as a shortened TTI, a short TTI, a partial TTI (partial or fractional TTI), a shortened subframe, a short subframe, a minislot, a subslot, a slot, and the like.

In addition, a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

The resource block (RB) is a resource allocation unit in the time domain and frequency domain, and may include one or a plurality of continuous subcarriers in the frequency domain. The number of subcarriers included in RB may be, for example, twelve, and the same regardless of the topology. The number of subcarriers included in the RB may be determined based on the neurology.

Also, the time domain of RB may include one or a plurality of symbols, and may have a length of 1 slot, 1 minislot, 1 subframe, or 1 TTI. Each TTI, subframe, etc. may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, etc.

A resource block may be configured by one or a plurality of resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB based on the common reference point of the carrier. PRB may be defined in BWP and numbered within that BWP.

BWP may include UL BWP (UL BWP) and DL BWP (DL BWP). One or a plurality of BWPs may be set in one carrier for the UE.

At least one of the configured BWPs may be active, and the UE may not expect to send and receive certain signals/channels outside the active BWP. Note that "cell", "carrier", and the like in this disclosure may be read as "BWP".

The above-described structures such as a radio frame, subframe, slot, minislot, and symbol are merely examples. For example, the number of subframes included in a radio frame, the number of slots per subframe or radio frame, the number of minislots included in a slot, the number of symbols and RBs included in a slot or minislot, the subcarriers included in RBs, and the number of symbols included in TTI, a symbol length, the cyclic prefix (CP) length, and the like can be changed in various manner.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, printed electrical connections, and as some non-limiting and non-exhaustive examples, by using electromagnetic energy having wavelengths in the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each apparatus may be replaced with "unit", "circuit", "device", and the like.

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as a, an, and the in English are added, in this disclosure, these articles shall include plurality of nouns following these articles.

As used in this disclosure, the terms "determining" and "determining" may encompass a wide variety of actions. "Judgment" and "decision" includes judging or deciding by, for example, judging, calculating, computing, processing, deriving, investigating, looking up, search, inquiry (e.g., searching in a table, database, or other data structure), ascertaining, and the like. In addition, "judgment" and "decision" can include judging or deciding by receiving (for example, receiving information), transmitting (for example, transmitting information), input (input), output (output), and access (accessing) (e.g., accessing data in a memory). In addition, "judgement" and "decision" can include judging or deciding by resolving, selecting, choosing, establishing, and comparing. That is, "judgment" or "decision" may include regarding some action as "judgment" or "decision". Moreover, "judgment (decision)" may be read as "assuming", "expecting", "considering", and the like.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

10 radio communication system
20 E-UTRAN
30 NG RAN
40 UPF
100A eNB
100B gNB
110 radio communication unit
120 RRC processing unit
130 DC processing unit
140 control unit
200 UE
210 radio communication unit
220 RRC processing unit
230 DC processing unit
240 control unit
1001 processor
1002 memory
1003 storage
1004 communication device
1005 input device
1006 output device
1007 bus

## Claims

1. A terminal comprising:
a reception unit that receives a reconfiguration message of a specific layer including a reconfiguration parameter of a deactivated secondary cell group; and
a control unit that performs reconfiguration of the specific layer with respect to the secondary cell group based on the reconfiguration parameter included in the received reconfiguration message.

2. A terminal comprising:
a reception unit that receive a reconfiguration message of a specific layer; and
a control unit that avoids use of a reconfiguration parameter included in the reconfiguration message when a secondary cell group is inactive.

3. The terminal according to claim 1 or 2, wherein the control unit:
determines whether or not the secondary cell group is in an inactive state; and
when the secondary cell group is in an inactive state, stops at least either a bearer of the secondary cell group or transmission in the secondary cell group.

4. A radio communication method including the steps of:
receiving, by a terminal, a reconfiguration message of a specific layer including a reconfiguration parameter of a deactivated secondary cell group; and
performing, by the terminal, reconfiguration of the specific layer with respect to the secondary cell group based on the reconfiguration parameter included in the received reconfiguration message.

5. A radio communication method including the steps of:
receiving, by a terminal, a reconfiguration message of a specific layer; and
avoiding, by the terminal, use of a reconfiguration parameter included in the reconfiguration message when a secondary cell group is inactive.
